# EUROPEAN PATENT APPLICATION

(11) **EP 2 719 785 A1**
(43) Date of publication of application: **16.04.2014**
(21) Application number: 12796970.7
(22) Date of filing: 08.06.2012
(51) Int. Cl.: C22C 32/00, C22C 29/00, C22C 13/00, C22C 18/00, C22C 38/44, F42B 12/74, F42B 7/04

(54) **ECOLOGICAL AMMUNITION**

(30) Priority: 08.06.2011 ES 201130955
(71) Applicant: Real Federacion Espanola de Caza, 28039 Madrid (ES)
(72) Inventor: PÉREZ TRUJILLO, Francisco, Javier, E-28039 Madrid (ES); HIERRO DE BENGOA, María, Pilar, E-28039 Madrid (ES); LASANTA CARRASCO, María, Isabel, E-28039 Madrid (ES); TEJERO GARCÍA, Marta, E-28039 Madrid (ES); REY BONET, Aitor, E-28039 Madrid (ES); FERNÁNDEZ DÍAZ- CARRALERO, Angel, Gabriel, E-28039 Madrid (ES)
(74) Representative: Carpintero Lopez, Francisco
(86) International application number: PCT/ES2012/070428
(87) International publication number: WO 2012/168530

(57) **Abstract**

The present invention relates to a composite material for the production of ecological ammunition characterized in that it comprises a) a metal matrix formed by a zinc and bismuth alloy, zinc and aluminum alloy, tin and bismuth alloy or zinc and tin alloy and a metal selected from aluminum, bismuth and the combination thereof and b) reinforcing metal particles distributed therein selected from tungsten, ferro-tungsten, ferro-tungsten carbides, tungsten carbides, tungsten oxides and ferro-tungsten oxides, subjected to oxidation before being added to the metal matrix.

## Description

### Field of the Invention

The present invention relates to new composite materials that replace lead, among other applications, for the production of ecological ammunition such as pellets, for example, comprising a metal matrix in which reinforcing metal particles are distributed.

### Background of the Invention

Lead pellets are conventionally used in hunting activities. Density is the characteristic which provides the lead pellet its excellent ballistics properties. This characteristic is what makes obtaining new materials for the production of pellets suitable for said hunting activities very difficult.

However, the high toxicity of lead which involves a constant deterioration of the environment, particularly in wetlands, as well as the poisoning of a large number of animal species, has created the need to develop various solutions to overcome this serious problem.

One of the replacements for lead is steel and, in fact, ammunition based on said material is available on the market. However, it has significant drawbacks which include having a low density and being harder than lead, which necessarily involves a larger amount of explosives, thus limiting the weapon that can be used.

United States patent US 4949644 describes the development of bismuth shot pellets. Said material has a density greater than that of steel but less than that of lead. Along with this problem, bismuth is a very fragile material that leads to the fracture and disintegration of the pellet during impact.

United State patents US5264022, US5527376 and US5713981 describe the development of shot pellets containing iron-tungsten binary alloy in different proportions (with a percentage of tungstentungsten of 30-46%, of 40-60%, or of 30-65%). The main drawback of this material is that it is very hard which translates into damage produced in the barrel of the weapon.

United States patent US4949645 describes the development of pellets formed by tungstentungsten and a powder polymer (polyethylene or silicone rubber, for example). The problem of this material lies in the fact that the projectile is a non-penetrating projectile because the kinetic energy is absorbed and dissipated for deformation thereof.

United States patent US6149705 describes the development of pellets formed by a tungstentungsten carbide powder core which can also contain elements such as tungsten or tantalum, coated with metals such as aluminum, bismuth, copper, tin or zinc. However, said ammunition has the drawback of the tungstentungsten carbide core being too hard therefore, upon hitting the game, produces an exit wound hole on the animal.

British patent GB 2211920 A describes the development of pellets formed by zinc-aluminum or zinc-tin alloys, with possible additions of other metals such as copper, magnesium, silicon, alkaline or earth alkaline metals. However, said ammunition have a low density with respect to that of lead, which can lead to the need of changing the weapon.

British patent GB 2327113 A describes the development of pellets formed by a tin-bismuth alloy, preferably at the proportion of eutectic mixture (45% Bi and 55% Sn), which also have drawbacks in terms of density and purity.

No material alternative to lead which will allow producing ecological ammunition intended for hunting activities had been described until patent ES 2223305.

In said Spanish patent ES 2223305, the authors provided a composite material which allowed replacing lead for its entire range of ballistics properties, since the ammunition produced from said composite material had good properties relating to the range and to the transmission of kinetic energy during impact as a result of optimal deformability. Said composite material was based on a metal matrix in which reinforcing particles were distributed, the metal matrix being formed by a zinc and bismuth alloy, zinc and aluminum alloy, or tin and bismuth alloy and the reinforcing metal particles being of tungstentungsten or ferrotungstentungsten, subjected to oxidation before being added to the metal matrix. These materials are ODS (oxide dispersion strengthened)-type material.

Furthermore, the authors of patent ES 2223305 described ecological ammunition produced from the described composite material.

Based on new advances in their experimentation work, the authors of the present invention have introduced a series of improvements in the composition of the ODS-type composite material of patent ES 2223305. Specifically, in this addition they contemplate a new base metal alloy of tin and zinc, as well as the incorporation of a third metal selected from aluminum and/or bismuth, to the metal matrix.

The new addition of the metal elements, i.e., aluminum, bismuth and the tinzinc alloy, complements the extensive range of possible composite materials protected in patent ES 2223305, composite materials thus being able to be tailor-made: with low, high and medium density, high, low and medium melting point; a wide range of hardness, plasticities and deformabilities.

The new composite materials with the addition of bismuth have higher densities, lower melting point and an optimal combination of hardness-plasticity properties.

The new materials with the addition of aluminum enable obtaining a new range of materials that are lighter in weight, which were not contemplated in patent ES 2223305.

In addition to the production of ecological ammunition, the improvements in the composition of the composite material allow the use thereof in new applications, such as the production of leaded hooks and weights for fishing, inertial counterweights in automobiles and mobile devices, weldings in electronic products, sports equipment, radiation protection equipment, personal protection equipment, car batteries and water pipes.

### Object of the Invention

The object of the present invention is the same as that of Spanish patent ES 2223305, i.e., to provide a composite material alternative to lead for the production of ecological ammunition comprising a metal matrix and reinforcing metal particles distributed therein.

However, a series of improvements that is detailed below in the description has furthermore been included in the composite material. These improvements furthermore allow replacing lead in other applications.

### Detailed Description of the Invention

The present invention provides an ecological ODS (oxide dispersion strengthened)-type composite material comprising a) a metal matrix formed by a zinc and bismuth alloy, zinc and aluminum alloy, tin and bismuth alloy or zinc and tin alloy and a metal selected from aluminum, bismuth and the combination thereof and b) reinforcing metal particles distributed therein selected from tungsten, ferro-tungsten, ferro-tungstencarbides, tungsten carbides, tungsten oxides and ferro-tungsten oxides, subjected to oxidation before being added to the metal matrix.

The incorporation of the aluminum and/or bismuth to the base metal alloy of patent 2223305, results in new improved materials in terms of density, deformability and hardness.

Particularly, the incorporation of bismuth to the composite materials of patent ES 2223305, entails the possibility of obtaining new composite materials with higher density and lower melting point, whereas the addition of aluminum allows obtaining composite materials that are lighter in weight and less expensive, all this improving the formability and deformability properties which the composite materials of patent ES 2223305 already had.

One of the advantages entailed by the new addition of bismuth to the composite materials of patent ES 2223305 is the ability to reduce the melting points of said composite materials. This leads to significant financial savings in terms of energy cost entailed by melting these new composite materials and, therefore, cost savings of the end product elaborated.

Another improvement entailed by the addition of bismuth to the composite materials of patent ES 2223305 is the production of new composite materials with intermediate properties between the specific fragility of bismuth and the harder composite materials, thus maintaining the optimal deformability properties which these composite materials have.

Furthermore, the addition of bismuth allows obtaining materials with even higher density. This fact enables using these new composite materials with guarantees in those applications in which lead is still present and which have been mentioned above.

On the other hand, the new addition of aluminum to the composite materials of patent ES 2223305 enables obtaining a new range of materials that are lighter in weight at a lower cost, which can be used for those applications that require lightweight components, given that aluminum is a metal element with a low density.

In those cases in which the base metal alloy is a zinc and bismuth alloy, tin and bismuth alloy or zinc and tin alloy, the addition of aluminum is contemplated. In these cases, in a preferred embodiment the aluminum is present in a proportion of 0.1-10% by weight with respect to the total weight of the metal alloy.

In those cases in which the base metal alloy is a zinc and aluminum alloy or zinc and tin alloy, the addition of bismuth is contemplated. In these cases, in a preferred embodiment the bismuth is present in a proportion of 0.1-10% by weight with respect to the total weight of the metal alloy.

In the cases in which the base metal alloy a zinc and tin alloy, the addition of aluminum and/or bismuth is contemplated, each in a proportion of 0.1-10% by weight with respect to the total weight of the metal alloy.

In particular embodiments, in addition to 0.1-10% by weight of aluminum and/or bismuth, the metal matrix is formed by a zinc and bismuth alloy with 2-44% by weight of bismuth and 56-98% by weight of zinc; or a zinc and aluminum alloy with 75-95% by weight of zinc and 5-25% by weight of aluminum; or a bismuth and tin alloy with 71-99% by weight of bismuth and 1-29% by weight of tin, or a zinc and tin alloy with 1-99% by weight of zinc and 99-1% by weight of tin, in percentages by weight with respect to the total weight of the alloy.

The new metal alloys contemplated in the present application would therefore be defined by the following formulas:
- Bi (2-44%) - Zn (56-98%) + Al (0.1-10%)
- Zn (75-95%) - Al (5-25%) + Bi (0.1-10%)
- Bi (71-99%) - Sn (1-29%) + Al (0.1-10%)
- Zn (1-99%) - Sn (99-1 %) + Al (0.1-10%)
- Zn (1-99%) - Sn (99-1 %) + Bi (0.1-10%)
- Zn (1-99%) - Sn (99-1 %) + Al (0.1-10%) and Bi (0.1-10%)

The melting temperatures of these new ODS-type materials would be comprised between 300-600°C in the case of bismuth and zinc, between 300-650°C in the case of zinc and aluminum, between 170-400°C in the case of bismuth and tin, or between 300-600°C in the case of zinc and tin.

In a particular embodiment of the composite material of the invention, the reinforcing metal particles have a mean diameter of 1-500 µm.

In another particular embodiment, the proportion between the metal matrix and the reinforcing metal particles varies between 0 and 1.5.

In another particular embodiment, the metal matrix of the new composite material additionally comprises a metal selected from antimony, iron, tin, zinc, copper and combinations thereof.

The composition of the new composite material contemplated in this addition to patent ES 2223305 provides it with properties making it suitable not only for the production of ecological ammunition, but also for the production of leaded hooks and weights for fishing, inertial counterweights in automobiles and mobile devices, weldings in electronic products, sports equipment, radiation protection equipment, personal protection equipment, car batteries and water pipes.

Although, as a result of their properties, any one of the different types of composite materials contemplated in this invention are suitable for any one of the mentioned applications, in a preferred embodiment of the invention, the new composite ODS-type material is formed by tin-bismuth base alloy and aluminum (1-10%), has a density comprised between 8-9 g/cc, a melting point comprised between 350-650°C and mechanical properties such as a good ductility and malleability, which make it an optimal composite material for the production of leaded hooks and weights for fishing.

In another preferred embodiment of the invention, the new composite material is formed by zinc-tin base alloy and bismuth (1-10%), has a density comprised between 7.5-8 g/cc, a melting point comprised between 350-650°C and physical properties such as a low melting point, which make it an optimal composite material for use in weldings of electronic products.

In another aspect of the invention, ecological ammunition produced from the composite material of the present invention is contemplated.

In a particular embodiment, said ecological ammunition is a pellet with a density of 7-14 g/cm³.

In another preferred embodiment, said pellet has magnetic properties.

## Claims

1. Composite material for the production of ecological ammunition **characterized in that** it comprises a) a metal matrix formed by a zinc and bismuth alloy, zinc and aluminum alloy, tin and bismuth alloy or zinc and tin alloy and a metal selected from aluminum, bismuth and the combination thereof and b) reinforcing metal particles distributed therein selected from tungsten, ferro-tungsten, ferro-tungsten carbides, tungsten carbides, tungsten oxides and ferro-tungsten oxides, subjected to oxidation before being added to the metal matrix.

2. Composite material according to claim 1, **characterized in that** bismuth is in a proportion of 0.1-10% by weight with respect to the total weight of the metal alloy.

3. Composite material according to claim 1 or 2, **characterized in that** aluminum is in a proportion of 0.1-10% by weight with respect to the total weight of the metal alloy.

4. Composite material according to claim 2 or 3, **characterized in that** the metal matrix is formed by a zinc and bismuth alloy with 2-44% by weight of bismuth and 56-98% by weight of zinc; or a zinc and aluminum alloy with 75-95% by weight of zinc and 5-25% by weight of aluminum; or a bismuth and tin alloy with 71-99% by weight of bismuth and 1-29% by weight of tin, or a zinc and tin alloy with 1-99% by weight of zinc and 99-1 % by weight of tin, in percentages by weight with respect to the total weight of the alloy.

5. Composite material according to any of the preceding claims, **characterized in that** the reinforcing metal particles have a mean diameter of 1-500 µm.

6. Composite material according to any of the preceding claims, **characterized in that** the proportion between the metal matrix and the reinforcing metal particles varies between 0 and 1.5.

7. Composite material according to any of the preceding claims, **characterized in that** the metal matrix additionally comprises a metal selected from antimony, iron, tin, zinc, copper and combinations thereof.

8. Use of a composite material according to any of the preceding claims in the production of leaded hooks and weights for fishing, inertial counterweights in automobiles and mobile devices, weldings in electronic products, sports equipment, radiation protection equipment, personal protection equipment, car batteries and water pipes.

9. Ecological ammunition produced from the composite material of claims 1-7.

10. Ecological ammunition according to claim 9, **characterized in that** it is a pellet with a density of 7-14 g/cm³.

11. Ecological ammunition according to claim 10, **characterized in that** said pellet has magnetic properties.
